# EUROPÄISCHE PATENTSCHRIFT

(11) **EP 0 500 987 B1**
(45) Veröffentlichungstag und Bekanntmachung des Hinweises auf die Patenterteilung: **31.01.1996**
(21) Anmeldenummer: 91102941.1
(22) Anmeldetag: 27.02.1991
(51) Int. Cl.: H04L 12/46

(54) **Verfahren zum Erfassen von Kommunikationsendgeräteadressen in einer lokale Netze verbindenden Netzübergangseinrichtung**
Method for detecting terminal addresses in a bridge connecting local area networks
Procédé pour déterminer les adresses des terminaux dans un dispositif interconnectant des réseaux locaux

(43) Veröffentlichungstag der Anmeldung: 02.09.1992
(73) Patentinhaber: SIEMENS AKTIENGESELLSCHAFT, D-80333 München (DE)
(72) Erfinder: Stöckl, Werner, Dr., W-8000 München 71 (DE); Hünlich, Klaus, W-8059 Niederneuching (DE); Walker, Roland, W-8192 Geretsried (DE); Horsmann, Hans, Dr., W-8000 München 70 (DE); Rebstock, Helmut, W-8000 München 71 (DE)

(56) Entgegenhaltungen:
- EP-A- 0 269 978
- DE-A- 4 023 527

## Beschreibung

Zwei lokale Netze, z. B. Ring- und/oder Busnetze, werden üblicherweise mit Hilfe von Netzübergangseinrichtungen ("Bridges") verbunden. In diesen Netzübergangseinrichtungen findet die physikalische und prozedurale Anpassung der beiden angeschlossenen lokalen Netze statt. Verbindet die Netzübergangseinrichtung beispielsweise ein Busnetz nach dem internationalen ANSI/IEEE-Standard CSMA/CD (Carrier Sense Multiple Access With Collision Detection) und ein Doppelringnetz, z. B. ein CP-Ringnetz (Circuit and Packet Switched-Ringnetz), so weist diese Netzübergangseinrichtung entsprechende Netzanschlußeinrichtungen für den physikalischen und den prozeduralen Anschluß beider lokaler Netze auf. Eine derartige Kopplung von lokalen Netzen ist beispielsweise aus der Druckschrift 'telcom report' 13 (1990), Heft 4, Seiten 156 bis 159, "Ring frei für gleichzeitige Sprach- und Datenübertragungen", bekannt.

Für den gezielten Kommunikationsaustausch zwischen den an die jeweiligen lokalen Netze angeschlossenen Kommunikationsendgeräten - beispielsweise Personal Computer, weitere Netzübergangseinrichtungen und/oder private Vermittlungsanlagen - sind diesen Kommunikationsendgeräteadressen bzw. Rufnummern zugeordnet. Aus der Druckschrift ist des weiteren bekannt, daß diese Kommunikationsendgeräteadressen der an die Netzübergangseinrichtungen angeschlossenen lokalen Netze automatisch netzindividuell erlernt bzw. erfaßt, d. h. für jedes Netz separat detektiert und gespeichert werden. Die netzindividuell erfaßten Kommunikationsendgeräteadressen sind in netzindividuellen Adressentabellen zusammengefaßt, z. B. für das an die Netzübergangseinrichtung angeschlossene Busnetz eine Busnetzadressentabelle. Mit Hilfe der in den Adressentabellen gespeicherten Kommunikationsendgeräteadressen werden die innerhalb eines lokalen Netzes zu übermittelnden paketierten Nachrichten von den weiteren lokalen Netzen ferngehalten. Dies wird dadurch erreicht, daß eine paketierte Nachricht, deren Zieladresse in der Adressentabelle des jeweiligen lokalen Netzes vorhanden ist, in der Netzübergangseinrichtung nicht an das weitere angeschlossene lokale Netz übermittelt wird (Filterfunktion).

Darüberhinaus ist aus der Druckschrift bekannt, daß über das Doppel-CP-Ringnetz mehrere Netzübergangseinrichtungen verbunden sind. An die Netzübergangseinrichtungen sind jeweils weitere lokale Busnetze oder Ringnetze anschließbar. Hierbei werden jeweils in den Netzübergangseinrichtungen die in den an diese angeschlossenen lokalen Netze auftretenden Kommunikationsendgeräteadressen und die zugeordneten Netzübergangseinrichtungsadressen automatisch erlernt, d. h. erfaßt und gespeichert, und in separaten Adressentabellen oder in einer für das direkt angeschlossene lokale Netz separaten Adressentabelle und in einer zusätzlichen, die Kommunikationsendgeräteadressen der weiteren lokalen Netze aufweisenden Adressentabelle in den Speichereinrichtungen der jeweiligen Netzübergangseinrichtungen hinterlegt.

Die hierbei erforderlichen Adressentabellen können alternativ durch betriebstechnische, paketierte Nachrichten, die in einer Netzmanagementeinrichtung gebildet und an die Kommunikationsendgeräte des zugehörigen lokalen Netzes übermittelt werden, eingerichtet werden. Die jeweils Kommunikationsendgeräteadressen eines lokalen Netzes aufweisenden Adressentabellen sind für die Übermittlung über das lokale Netz in den Informationsteil der betriebstechnischen paketierten Nachrichten eingefügt.

Das automatische Lernen von Kommunikationsendgeräteadressen und der zugeordneten Netzübergangseinrichtungsadressen wird dadurch bewirkt, daß in den Netzübergangseinrichtungen die in den beiden angeschlossenen lokalen Netzen in den paketierten Nachrichten auftretenden Kommunikationsendgeräte- und Netzübergangseinrichtungsadressen detektiert und durch Vergleich mit den bereits gespeicherten Adressen ermittelt wird, ob die Adresse bereits bekannt oder unbekannt ist. Resultiert aus dem Vergleich eine unbekannte Kommunikationsendgeräteadresse bzw. Netzübergangseinrichtungsadresse, so wird diese in die jeweilige Adressentabelle der Netzübergangseinrichtung eingetragen. Die eingetragenen Kommunikationsendgeräte- bzw. Netzübergangseinrichtungsadressen bzw. die hierdurch gebildeten Adressentabellen werden für die "Filterung" der Nachrichtenpakete im Lokalbetrieb und für das gezielte "Routen" der Nachrichten über die jeweilige Netzübergangseinrichtung an weitere Netzübergangseinrichtungen weiterer lokaler Netze herangezogen. Bei den häufig eingesetzten Busnetzen, insbesondere dem CSMA/CD-Netz nach dem internationalen ANSI/IEEE-Standard 802.3 (Carrier Sense Multiple Access With Collision Detection) und den Ringnetzen, insbesondere nach dem internationalen Standard ANSI/IEEE 802.5 (Token Ring Access Method) werden die in die Ziel- und Ursprungsadreßfelder der paketierten Nachrichten eingefügten Ursprungs- und Zieladressen jeweils durch eine 48 Bit umfassende binäre Kommunikationsendgeräteadresse gebildet. In den Netzübergangseinrichtungen ist folglich beim Erfassen von Kommunikationsendgeräteadressen ein Vergleich von 48 Bit umfassenden Adressen erforderlich. Derartige Vergleiche von mehrere Bit aufweisenden Kommunikationsendgeräteadressen bzw. auch den hierbei erfaßten Netzübergangseinrichtungsadressen werden üblicherweise durch mehrere binäre Vergleiche - z. B. bei 16 Bit-Steuerungen bzw. Prozessoren sind für einen Adressenvergleich drei Binär-Vergleiche erforderlich - in den programmgesteuerten Steuereinrichtungen der Netzübergangseinrichtungen durchgeführt und stellen insbesondere bei umfangreichen Adressentabellen - d. h. Adressentabellen mit mehreren Kommunikationsendgeräteadressen - eine erhebliche dynamische und zeitliche Belastung dar, zumal aufgrund der hohen Übermittlungsgeschwindigkeiten - größer 1 MBit/s - der paketierten Nachrichten in den lokalen Netzen die programmgesteuerten Steuereinrichtungen hinsichtlich hoher Verarbeitungsgeschwindigkeiten und Realzeitverarbeitungen bereits erheblich dynamisch belastet sind.

Des weiteren ist aus der DE 40 23 527 A1 eine Netzübergangseinrichtung mit einer Adressenprüfschaltung bekannt, mit deren Hilfe jeweils die in einem Übertragungsrahmen eingefügten zweiten Stationsadressen überprüft werden. Die Überprüfungen erfolgen zur Beurteilung, ob der Übertragungsrahmen intern oder über die Netzübergangseinrichtung zu übermitteln ist und des weiteren zur Lernverarbeitung der Stationsadressen. Für diese überprüfung wird jeweils aus der zweiten, n Bit umfassenden Stationsadresse mit Hilfe eines Hashverfahrens eine n-m (m<n) Bit aufweisende Hashspeicheradresse berechnet, wobei die Hashspeicheradresse die Adresse eines n-m Bit umfassenden Speicherplatzes einer in der Netzübergangseinrichtung realisierten Hashspeichereinrichtung darstellt.

Die der Erfindung zugrundeliegende Aufgabe besteht darin, das bekannte Verfahren zum Erfassen von an lokale Netze angeschlossenen Kommunikationsendgeräten zu verbessern. Die Aufgabe wird ausgehend von dem bekannten Verfahren gemäß den Merkmalen des Patentanspruchs 1 durch dessen kennzeichnende Merkmale gelöst.

Der wesentliche Aspekt der Erfindung ist darin zu sehen, daß in dem durch die Hashspeicheradresse adressierten Speicherplatz eine Adreßinformation eingetragen ist, die auf einen n Bit umfassenden Speicherbereich einer in der Netzübergangseinrichtung angeordneten Adreßtabellen-Speichereinrichtung zeigt und bei Nichtvorhandensein einer Kommunikationsendgeräteadresse im angezeigten Speicherbereich die aktuell detektierte Kommunikationsendgeräteadresse in diesen Speicherbereich gespeichert wird und bei Vorhandensein derselben Kommunikationsendgeräteadresse die detektierte Kommunikationsadresse als erfaßt bewertet wird, wobei das Vorhandensein bzw. Nichtvorhandensein durch eine Gültigkeitsinformation angezeigt wird.

Die Gültigkeitsinformation stellt beispielsweise eine 1 Bit umfassende Information dar, die beim Speichern einer Kommunikationsendgeräteadresse in einen definierten Informationszustand gesteuert wird. Durch einen einmaligen Berechnungsvorgang und das Abfragen einer einfachen Gültigkeitsinformation wird die Steuerung der Netzübergangseinrichtungen beim Erfassen von Kommunikationsendgeräteadressen erheblich dynamisch entlastet, da ein wiederholtes binäres Vergleichen von detektierten und gespeicherten Kommunikationsendgeräteadressen vermieden wird. Neben der erheblichen dynamischen Entlastung der Steuereinrichtung der Netzübergangseinrichtungen wird eine erheblich kürzere Erfassungszeit bewirkt, wodurch das erfindungsgemäße Verfahren besonders vorteilhaft für lokale Netze mit sehr hohen Ubermittlungsgeschwindigkeiten der paketierten Nachrichten geeignet ist.

Ein weiterer Vorteil des erfindungsgemäßen Verfahrens ist darin zu sehen, daß für jede Erfassung einer Kommunikationsendgeräteadresse definierte Erfassungszeiten vorgesehen sind. Unterschiedliche Erfassungszeiten ergeben sich lediglich durch eine Erfassung der Kommunikationsendgeräteadresse mit und ohne Abspeicherung in den Adreßtabellen-Speichereinrichtungen. Durch diesen definierten bzw. vorgegebenen Erfassungszeitraum wird eine weitere Reduzierung der Erfassungszeit erreicht, wodurch das erfindungsgemäße Verfahren noch vorteilhafter für höhere Übermittlungsgeschwindigkeiten in lokalen Netzen geeignet ist.

Die Netzübergangseinrichtungen verbinden nicht nur lokale Netze direkt miteinander, sondern werden zusätzlich als Netzübergänge zum Verbinden mehrerer lokaler Netze eingesetzt. Dies wird dadurch erreicht, daß die den lokalen Netzen zugeordneten Netzübergangseinrichtungen an ein lokales Verbundnetz angeschlossen sind. Diese lokalen Verbundnetze können - wie auch die lokalen Netze - durch Ring- oder Busnetze realisiert sein. Eine Vielzahl von lokalen Netzen kann auch über mehrere Verbundnetze miteinander verbunden werden. Für die gezielte Vermittlung der paketierten Nachrichten von Netzübergangseinrichtung zu Netzübergangseinrichtung sind neben den Kommunikationsendgeräteadressen Netzübergangseinrichtungsadressen vorgesehen. Nach einer vorteilhaften Weiterbildung des erfindungsgemäßen Verfahrens werden diese Netzübergangseinrichtungsadressen ebenfalls mit Hilfe des Hashverfahrens erfaßt und gespeichert - Anspruch 2. Bei der Erfassung der Netzübergangseinrichtungsadressen ist deren Beziehung zu den in den paketierten Nachrichten angegebenen Ursprungskommunikationsendgeräteadressen zu beachten, d. h. die Zuordnung der Kommunikationsendgeräteadressen eines lokalen Netzes zur zugehörigen Adresse der Netzübergangseinrichtung ist anzugeben. Eine erfaßte Netzübergangseinrichtungsadresse wird zusätzlich einer paketierten Nachricht beigefügt, wenn in dieser eine der Netzübergangseinrichtungsadresse zugeordnete Ziel-kommunikationsendgeräteadresse angegeben ist. Wurde für eine über ein Verbundnetz zu übermittelnde paketierte Nachricht noch keine Netzübergangseinrichtungsadresse erfaßt und gespeichert, wird der paketierten Nachricht eine Rundsendeinformation beigefügt. Mit Hilfe dieser Rundsendeinformation wird im Gegensatz zu einer eingefügten Netzübergangseinrichtungsadresse, durch die eine paketierte Nachricht gezielt an eine Netzübergangseinrichtung vermittelt wird, die paketierte Nachricht an alle Netzübergangseinrichtungen des jeweiligen Verbundnetzes übermittelt. Hierbei ist in jeder der Netzübergangseinrichtungen zu überprüfen, ob die angegebene Zielkommunikationsendgeräteadresse und das diesem zugeordnete Kommunikationsendgerät in dem angeschlossenen lokalen Netz realisiert ist. Eine gezielte Übermittlung der paketierten Nachrichten an eine Netzübergangseinrichtungsadresse vermeidet somit die die Steuerungen der Netzübergangseinrichtungen dynamisch belastenden Überprüfungsvorgänge.

Besonders vorteilhaft wird eine von einem lokalen Netz an ein Verbundnetz oder von einem Verbundnetz an ein weiteres Verbundnetz zu übermittelnde Nachricht jeweils in den Informationsteil der über das Verbundnetz oder das weitere Verbundnetz zu übermittelnde paketierte Nachrichten eingefügt - Anspruch 3. Die Ursprungs- und Ziel-Netzübertragungseinrichtungsadressen werden in die Ursprungs- und Zieladressenfelder der über die Verbundnetze zu übermittelnden paketierten Nachrichten eingetragen.

Da bei Anwendung des Hashverfahrens Mehrdeutigkeiten bzw. "Kollisionen" - d. h. einer Hashspeicheradresse können mehrere Kommunikationsendgeräteadressen zugeordnet sein - auftreten können, wird nach einer weiteren vorteilhaften Ausgestaltung der Erfindung zusätzlich überprüft, ob die im adressierten Speicherbereich der Adreßtabellen-Speichereinrichtung vorhandenen Kommunikationsendgeräteadressen mit den detektierten übereinstimmen - Anspruch 4. Die von den gespeicherten Kommunikationsendgeräteadressen unterschiedlich detektierten Kommunikationsendgeräteadressen werden bei gleicher Hashspeicheradresse zusätzlich in einem Kollisionsspeicherbereich der in der Netzübergangseinrichtung angeordneten Speichereinrichtung hinterlegt, sofern diese nicht bereits in einem Kollisionsspeicherbereich gespeichert sind. Dies bedeutet zwar einen zusätzlichen binären Vergleich der detektierten, mit den gespeicherten Kommunikationsendgeräteadressen bei einem Speichervorgang, jedoch stellt dieser eine zusätzliche Kommunikationsendgeräteadressenvergleich keine wesentliche zusätziche dynamische Belastung der Steuereinrichtung dar. Resultierend bleibt weiterhin eine erhebliche dynamische Entlastung der Steuerung der Netzübergangseinrichtungen bestehen.

Die Kollisionsspeicherbereiche können in einer separaten Kollisionstabellen-Speichereinrichtung der Netzübergangseinrichtung vorgesehen werden - Anspruch 5. Hierbei ist im hashadressierten Speicherbereich der Adreßtabellen-Speichereinrichtung zusätzlich eine Adresse vorgesehen, die einen Speicherbereich in der Kollisionstabellen-Speichereinrichtung anzeigt. Ist eine zusätzliche Adresse vorhanden, so ist bei dieser Adresse eine Kollisions-Kommunikationsendgeräteadresse gespeichert. Analog hierzu ist bei fehlender zusätzlicher Adresse bei Vorliegen einer Kollision ein freier Speicherbereich in der Kollisionstabellen-Speichereinrichtung zu ermitteln und dessen Adresse zusätzlich in den Speicherbereich der Adreßtabellen-Speichereinrichtung einzutragen. In dem ermittelten Speicherbereich wird die Kollisions-Kommunikationsendgeräteadresse hinterlegt und bei erneutem Kollisionsfall in die Kollisionsüberprüfung mit einbezogen.

Alternativ zur Anordnung des Kollisionsspeicherbereichs in einer separaten Kollisionstabellen-Speichereinrichtung können diese in der Adreßtabellen-Speichereinrichtung selbst angeordnet werden - Anspruch 6. Hierbei wird bei Vorliegen einer Kollision ein freier Speicherbereich in der Adreßtabellen-Speichereinrichtung ermittelt und dessen Adresse zusätzlich in den hashadressierten Speicherbereich eingetragen. Hierdurch wird eine Verkettung der beiden Speicherbereiche erreicht. Eine eingetragene Adresse bedeutet - wie auch bei der Anordnung des Kollisionsspeicherbereichs in einer Kollisionstabellen-Speichereinrichtung -, daß eine Kollisions-Kommunikationsendgeräteadresse vorliegt und in die Kollisionsüberprüfung einzubeziehen ist. Bei weiteren Kollisionen von Kommunikationsendgeräteadressen, die einer Hashspeicheradresse zugeordnet sind, werden die Adressen für die weiteren Kollisionsspeicherbereiche jeweils im vorhergehenden Kollisionsspeicherbereich zusätzlich hinterlegt und hierdurch miteinander verkettet.

Der beim Hashverfahren benutzte Hash-Algorithmus ist in Abhängigkeit von einer kurzen Berechnungszeit, von einem vorgegebenen Codekomprimierungsumfang der Kommunikationsendgeräteadressen und von dem überwiegend benutzten Kommunikationsendgeräteadreßraum zu wählen - Anspruch 7. Dies bedeutet, daß ein Hashalgorithmus besonders vorteilhaft eingesetzt wird, bei dem durch einen einzigen Berechnungsvorgang die Hashspeicheradresse berechnet wird. Ein besonders vorteilhafter Hashalgorithmus stellt die binäre Exoderierung der ersten beiden niederwertigsten Bytes mit den zweiten zwei niederwertigsten Byte der detektierten Kommunikationsendgeräteadresse dar - Anspruch 8. Hierdurch wird eine 16 Bit umfassende Hashspeicheradresse berechnet, die zugleich die Adresse einer Hashspeichereinrichtung repräsentiert. Durch diesen Hashalgorithmus wird des weiteren eine Reduzierung der Anzahl der Bits der detektierten 48 Bit umfassenden Kommunikationsendgeräteadresse auf eine 16 Bit umfassende Hashspeicheradresse bewirkt. Durch diese Reduzierung des Umfangs des Adreßcodes wird im wesentlichen die Größe der Hashspeichereinrichtung bestimmt. Durch eine Reduzierung weiterer höherwertiger Bits der berechneten Hashspeicheradresse, d. h. weitere höherwertige Bits der Hashspeicheradresse werden nicht zur Adressierung der Adreßtabellen-Speichereinrichtung herangezogen, kann die Hashspeicheradresse auf vorgegebene Hashspeichereinrichtungsgrößen abgestimmt werden - Anspruch 9. Durch diese vorteilhafte Ausgestaltung der Erfindung kann die Hashspeicheradresse auf handelsübliche Größen von Speichern, beispielsweise 2, 4, 8 KBytes, angepaßt werden.

Eine weitere vorteilhafte Ausgestaltung der Erfindung ist in dem Speichern von detektierten Kommunikationsendgeräteadressen bzw. Netzübergangseinrichtungadressen in netzindividuellen Adressentabellen zu sehen - Anspruch 10. Hierbei werden beispielsweise detektierte Kommunikationsendgeräteadressen oder Netzübergangseinrichtungsadressen für jedes lokale Netz separat oder die Kommunikationsendgeräteadressen eines angeschlossenen lokalen Netzes separat und alle weiteren Kommunikationsendgeräteadressen bzw. Netzübergangseinrichtungsadressen in einer weiteren Adressentabelle gespeichert. Bei der letzteren Variante sind an eines der an die Netzübergangseinrichtung angeschlossenen lokalen Netze die Kommunikationsendgeräte direkt angeschlossen - z. B. Kommunikationsendgeräte an ein Busnetz - und das zweite an die Netzübergangseinrichtung angeschlossene lokale Verbundnetz - z. B. ein Doppel-CP-Ringnetz - verbindet weitere Netzübergangseinrichtungen untereinander, an die weitere lokale Busnetze angeschlossen sind. Mit Hilfe einer für das angeschlossene lokale Busnetz separierten Adressentabelle und mit Hilfe des erfindungsgemäßen Verfahrens werden paketierte Nachrichten dahingehend überprüft, ob die zu übermittelnden paketierten Nachrichten an ein Kommunikationsendgerät innerhalb des lokalen Busnetzes adressiert sind - d. h. ob die Zielkommunikationsendgeräteadresse als Ursprungskommunikationsendgeräteadresse in der Adressentabelle des lokalen Busnetzes enthalten ist - und bei Feststellen von lokalen Kommunikationsendgeräteadressen werden die jeweiligen paketierten Nachrichten nicht über die Netzübergangseinrichtungen an das weitere angeschlossene lokale Netz bzw. Verbundnetz weitervermittelt (Filterfunktion) - Anspruch 11.

Eine weitere vorteilhafte Ausgestaltung des erfindungsgemäßen Verfahrens ist darin zu sehen, daß die in den Netzübergangseinrichtungen erfaßten Kommunikationsendgeräteadressen bzw. Netzübergangseinrichtungsadressen temporär in der Speichereinrichtung gespeichert werden, wobei die Speicherungsdauer auf die Größe der lokalen Netze und eine vorgegebene Flexibilität hinsichtlich des Konfigurierens der lokalen Netze abzustimmen ist - Anspruch 12. Durch diese Maßnahme wird bewirkt, daß die Kommunikationsendgeräteadressen bzw. Netzübergangseinrichtungsadressen der von den lokalen Netzen entfernten Kommunikationsendgeräten automatisch in Adressentabellen gelöscht werden. Die Speicherungsdauer, d. h. die Zeitspanne, bis die Kommunikationsendgeräteadressen bzw. Netzübergangseinrichtungsadressen gelöscht werden, ist hierbei auf die gewünschte Konfigurationsflexibilität - d. h. wie schnell bzw. flexibel soll auf Änderungen der Netzkonfiguration reagiert werden - abzustimmen.

Im folgenden wird das erfindungsgemäße Verfahren anhand dreier Blockschaltbilder und eines Ablaufdiagrammes näher erläutert. Dabei zeigen
- FIG 1: in einem Blockschaltbild eine Netzübergangseinrichtung mit zwei angeschlossenen lokalen Netzen,
- FIG 2: in einem Blockschaltbild die Struktur einer paketierten Nachricht in einem Verbundnetz,
- FIG 3: in einem Blockschaltbild eine Speichereinrichtungsstruktur in der Netzübergangseinrichtung und
- FIG 4: anhand eines Ablaufdiagrammes das erfindungsgemäße Verfahren zum Erfassen von Kommunikationsendgeräteadressen.

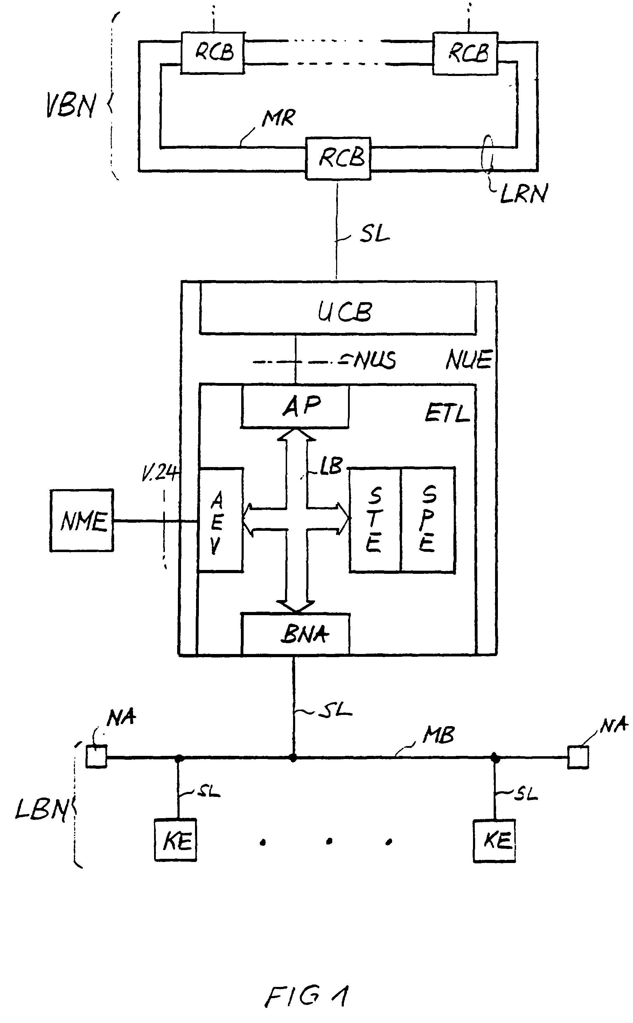

FIG 1 zeigt in einem Blockschaltbild eine Netzübergangseinrichtung NUE, an die ein lokales Busnetz LBN und ein lokales Doppelringnetz LRN sowie eine Netzmanagementeinrichtung NME angeschlossen ist. Der Anschluß des lokalen Busnetzes LBN wird über eine Busnetzanschlußeinrichtung ETL bewirkt. Für das Ausführungsbeispiel sei angenommen, daß das lokale Busnetz LBN physikalische und prozedurale Eigenschaften entsprechend dem ANSI/IEEE-Standard 802.3 aufweist. Die physikalische Anpassung des lokalen Busnetzes LBN an die physikalischen Eigenschaften eines in der Busnetzanschlußeinrichtung ETL angeordneten lokalen Bussystems LB wird durch eine Busnetzanpassungseinrichtung BNA - entspricht dem Attachment Unit Interface - bewerkstelligt. Die Busnetzanpassungseinrichtung BNA ist über eine Stichleitung SL mit dem Übertragungsmedium MB des lokalen Busnetzes LBN verbunden. Das Übertragungsmedium MB ist beispielsweise durch eine Koaxialleitung realisiert. Mit Hilfe von Netzabschlußeinrichtungen NA ist das Übertragungsmedium MB impedanzgerecht und reflexionsfrei abgeschlossen. Das Übertragungsmedium MB ist jeweils über weitere Stichleitungen SL mit Kommunikationsendgeräten KE verbunden. Kommunikationsendgeräte KE derartiger lokaler Busnetze LBN stellen beispielsweise Personal Computer, Terminals und Netzübergangseinrichtungen NUE dar. In den Kommunikationsendgeräten KE sind für den Anschluß an das lokale Busnetz LBN jeweils Busnetzanschlußeinrichtungen - nicht dargestellt - angeordnet.

Das lokale Busnetzsystem LB ist des weiteren mit einer Anschlußeinrichtung AEV für den Anschluß einer Netzmanagementeinrichtung NME, mit einer Steuereinrichtung STE und mit einer Anpassungseinrichtung AP verbunden. Die Anschlußeinrichtung AEV weist beispielsweise eine Schnittstelle entsprechend dem CCITT-Standard V.24 auf. In einer Netzmanagementeinrichtung NME - beispielsweise ein Personal Computer - sind die insbesondere das lokale Busnetz LBN verwaltenden Funktionen realisiert. Eine wesentliche Verwaltungsfunktion stellt beispielsweise die Verwaltung der im lokalen Busnetz LBN vorhandenen Netzkomponenten bzw. Netzresourcen dar. Die Anpassungseinrichtung AP stellt das Bindeglied zu einer Ringnetzanschlußeinrichtung UCB dar, wobei in dieser die physikalischen Eigenschaften des lokalen Bussystems LB an die Eigenschaften einer Netzübergangsschnittstelle NUS angepaßt werden.

Die Prozeduren gemäß des lokalen Busnetzes LBN nach dem Standard 802.3 sowie die Kommunikation mit der Netzmanagementeinrichtung NME und die Netzübergangsprozeduren gemäß der Netzübergangsschnittstelle NUS werden mit Hilfe der Steuereinrichtung STE gesteuert. Darüberhinaus werden durch die Steuereinrichtung STE zusammen mit der Speichereinrichtung SPE die Kommunikationsendgeräteadressen bzw. Netzübergangseinrichtungsadressen erfaßt, gespeichert und mit deren Hilfe die "Filterfunktion" bei Lokalbetrieb sowie im Sinne des Routens der paketierten Nachrichten das Hinzufügen der Netzübergangseinrichtungsadressen nach dem erfindungsgemäßen Verfahren durchgeführt. Die Steuereinrichtung STE ist beispielsweise durch einen Mikroprozessor SAB80186 der Firma Siemens realisiert. In der Speichereinrichtung SPE sind alle zur Durchführung des erfindungsgemäßen Verfahrens erforderlichen Speicherbereiche, Speicherplätze und Tabellen angeordnet.

Für den Anschluß des lokalen Doppelringnetzes LRN ist die Netzübertragungseinrichtung NUE mit einer Ringnetzanschlußeinrichtung UCB ausgestattet. Diese Ringnetzanschlußeinrichtung UCB ist über eine Stichleitung SL mit einer Ringkoppeleinrichtung RCB verbunden. Über diese Ringkoppeleinrichtung RCB werden die Übertragungsmedien MR des lokalen Ringnetzes LRN geführt. Die Übertragungsmedien MR seien beispielsweise durch Lichtwellenleiter realisiert. Mit Hilfe von jeweils in der Ringkoppeleinrichtung RCB angeordneten, nicht dargestellten Koppeleinrichtungen wird der über die Übertragungsmedien MR übermittelte Nachrichtenfluß über die Stichleitung SL an die Ringnetzanschlußeinrichtung UBC geleitet und der von der Ringnetzanschlußeinrichtung UBC über die Stichleitung SL übermittelte Nachrichtenfluß mit Hilfe von ebenfalls nicht dargestellten Koppeleinrichtungen an die Übertragungsmedien MR gekoppelt.

Für das Ausführungsbeispiel sei des weiteren angenommen, daß das lokale Ringnetz LRN durch ein Doppelringnetz realisiert ist. Bei diesem Doppelringnetz handelt es sich aus sicherheitstechnischen Gründen um zwei gegenläufige, gekoppelte Lichtwellenleiter-Ringnetze. Dieses Doppelringnetz ist des weiteren zur Übermittlung von digitalen Informationen vorgesehen, wobei die digitalen Informationen paketvermittelt (paket switched) mit beispielsweise einer Geschwindigkeit von 16 MBit/s übermittelt werden. In der Ringnetzanschlußeinrichtung UCB werden die zu übermittelnden bzw. empfangenen Informationen entsprechend dem ANSI/IEEE-Standard 802.5 bearbeitet und aus den übermittelten Informationen für eine Rahmensynchronisierung Taktinformationen abgeleitet. In dieser Ringnetzanschlußeinrichtung UCB wird des weiteren die protokollmäßige Abwicklung für die Übermittlung paketierter Informationen nach dem ANSI/IEEE-Standard 802.5 gesteuert. Die hierbei implementierten Funktionen entsprechen beispielsweise den Schichten 1 und 2 des OSI-Schichtenmodells (OSI Open Systems Interconnection).

Für das Ausführungsbeispiel sei weiterhin angenommen, daß das Doppelringnetz LRN ein mehrere lokale Busnetze LBN verbindendes Verbundnetz VBN darstellt. Die weiteren lokalen Busnetze sind entsprechend der in FIG 1 dargestellten Busnetzanschaltung durch weitere Ringnetzkoppeleinrichtungen RCB an das Verbundnetz VB angeschaltet.

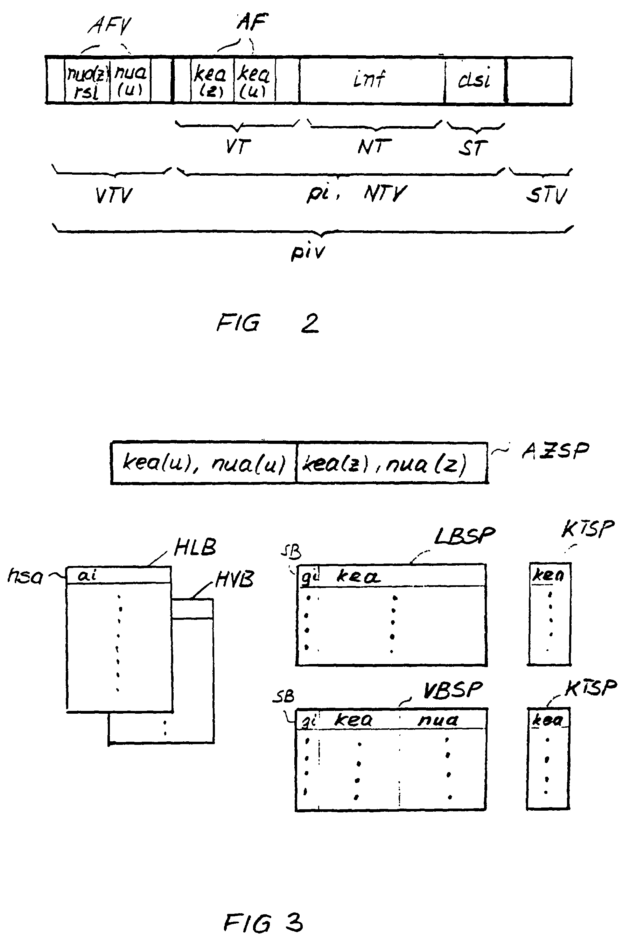

FIG 2 zeigt die Struktur einer paketierten Nachricht pi, die von einem Kommunikationsendgerät KE eines lokalen Busnetzes LBN über ein Verbundnetz VBN an ein Kommunikationsendgerät KE eines weiteren lokalen Busnetzes übermittelt wird. Hierbei wird in dem eine Nachricht aussendenden Kommunikationsendgerät KE eine paketierte Nachricht pi gemäß ANSI/IEEE-Standard 802.5 gebildet. Diese paketierte Nachricht pi weist im wesentlichen einen vermittlungstechnischen Teil VT, einen Nachrichtenteil NT und einen sicherungstechnischen Teil ST auf. Im vermittlungstechnischen Teil VT sind des weiteren zwei Adreßfelder AF vorgesehen, wobei in ein Adreßfeld AF die Ursprungs-Kommunikationsendgeräteadresse kea(u) - d. h. die Kommunikationsendgeräteadresse kea des die paketierte Nachricht pi aussendenden Kommunikationsendgerätes KE - und in das weitere Adreßfeld AF die Ziel-Kommunikationsendgeräteadresse kea(z) - d. h. die Kommunikationsendgeräteadresse kea des Kommunikationsendgerätes KE, an das die paketierte Nachricht pi zu übermitteln ist - eingetragen wird. In den Nachrichtenteil NT werden die zu übermittelnden digitalen Informationen inf, z. B. Anwenderdaten, eingefügt. Der sicherheitstechnische Teil ST wird üblicherweise durch Datenblocksicherungsinformationen dsi gebildet. Die Datenblocksicherungsinformationen dsi werden gemäß ANSI/ IEEE-Standard 802.3 mit Hilfe zyklischer Binärcodes erzeugt und an die zu übermittelnden Informationen inf angefügt. Die paketierte Nachricht pi gelangt über das lokale Busnetz LBN zu der zugeordneten Netzübergangseinrichtung NUE. In dieser wird mit Hilfe der Steuereinrichtung STE festgestellt, ob die paketierte Nachricht pi an ein Kommunikationsendgerät KE in einem weiteren lokalen Busnetz adressiert ist und an das Verbundnetz VBN weiterzuleiten ist. Vor einem Weiterleiten wird in der Netzübergangseinrichtung NUE die paketierte Nachricht pi in einen Nachrichtenteil NTV einer paketierten Nachricht piv für Verbundnetze VBN eingefügt. Analog zum Aufbau einer paketierten Nachricht pi wird eine paketierte Nachricht piv für Verbundnetze VBN durch einen vermittlungstechnischen Teil VTV, einen Nachrichtenteil NTV und einen sicherungstechnischen Teil STV gebildet. Der vermittlungstechnische Teil VTV enthält wiederum zwei Adreßfelder AFV, wobei in ein Adreßfeld AFV die Ursprungs-Netzübergangseinrichtungsadresse nua(u) und in das weitere Adreßfeld AFV die Ziel-Netzübergangseinrichtungsadresse nua(z) oder, sofern noch nicht erfaßt, eine Rundsendeinformation rsi eingetragen wird. Bei Eintrag einer erfaßten Ziel-Netzübergangseinrichtungsadresse nua(z) wird die paketierte Nachricht piv gezielt an diejenige Netzübergangseinrichtung NUE übermittelt, an deren zugeordnetem lokalen Busnetz LBN das durch die Ziel-Kommunikationsendgeräteadresse kea(z) adressierte Kommunikationsendgerät KE angeschlossen ist. Bei Eintrag einer Rundsendeinformation rsi wird die paketierte Nachricht piv an alle Netzübergangseinrichtungen NUE des Verbundnetzes VBN weitergeleitet und in diesen jeweils überprüft, ob das durch die Ziel-Kommunikationsendgeräteadresse kea(z) adressierte Kommunikationsendgerät KE im zugeordneten lokalen Busnetz LBN empfangsbereit ist. Die Überprüfung erfolgt durch Vergleiche der in der Adressentabelle für das lokale Busnetz LBN enthaltenen Kommunikationsendgeräteadressen kea mit der angegebenen Ziel-Kommunikationsendgeräteadresse kea(z) wiederum mit Hilfe des erfindungsgemäßen Verfahrens.

In FIG 3 ist anhand eines Blockschaltbildes die in der Speichereinrichtung SPE der Busnetzanschlußeinrichtung ETL erforderliche Speichereinrichtungsstruktur dargestellt. Hierbei werden die jeweils aktuell detektierten Kommunikationsendgeräteadressen kea oder Netzübergangseinrichtungsadressen nua in einer Adressenzwischenspeichereinrichtung AZSP hinterlegt. Hierbei ist für die Ursprungs-Kommunikationsendgeräteadresse kea(u) bzw. Netzübergangseinrichtungsadresse nua(u) und die Ziel-Kommunikationsendgeräteadresse kea(z) bzw. Netzübergangseinrichtungsadresse nua(z) ein separater Speicherbereich vorgesehen.

Die nach der binären Exoderierung des ersten und zweiten niederwertigsten mit dem dritten und vierten niederwertigsten Byte einer zwischengespeicherten Kommunikationsendgeräteadresse kea berechnete Hashspeicheradresse hsa wird in Abhängigkeit von der Detektion der Kommunikationsendgeräteadresse kea im lokalen Busnetz LBN oder Verbundnetz VBN einer Busnetz- oder Verbundnetz-Hashspeichereinrichtung HLB, HVB zugeordnet. Der Busnetz-Hash-speichereinrichtung HLB ist eine Adreßtabellen-Speichereinrichtung LBSP für das an die Netzübergangseinrichtung NUE lokal angeschlossene Busnetz LBN zugeordnet. In dieser Adreßtabellen-Speichereinrichtung LBSP werden die Kommunikationsendgeräteadressen kea der an das lokale Busnetz LBN angeschlossenen Kommunikationsendgeräte KE gespeichert. Jedem eine Kommunikationsendgeräteadresse kea enthaltenden Speicherbereich SB der Adreßtabellen-Speichereinrichtungen LBSP ist ein Bereich für das Eintragen bzw. Abfragen der Gültigkeitsinformation gi zugeordnet. In den einzelnen Speicherbereichen SB bleiben oder werden, je nach vorhandener Gültigkeitsinformation gi, die detektierten Kommunikationsendgeräteadressen kea des lokalen Busnetzes LBN gespeichert.

Der Verbundnetz-Hashspeichereinrichtung HVB ist eine Adreßtabellenspeichereinrichtung VBSP für über das Verbundnetz VBN angeschlossene weitere lokale Busnetz LBN zugeordnet. In dieser Adreßtabellen-Speichereinrichtung VBSP werden die Kommunikationsendgeräteadressen kea der weiteren an das Verbundnetz VBN angeschlossenen Kommunikationsendgeräte KE gespeichert. Analog zur Adreßtabellen-Speichereinrichtung LBSP für das lokale Busnetz LBN ist in einem eine Kommunikationsendgeräteadresse kea enthaltenden Speicherbereich SB ein Bereich für das Abfragen bzw. Eintragen einer Gültigkeitsinformation gi vorgesehen. Darüberhinaus wird zusätzlich zu einer erfaßten-Kommunikationsendgeräteadresse kea die zusammen mit dieser erfaßte Netzübergangseinrichtungsadresse nua eingetragen. Diese erfaßte Netzübergangseinrichtungsadresse nua wird bei der Übermittlung einer paketierten Nachricht pi von einem lokalen Busnetz LBN zu einem weiteren lokalen Busnetz LBN in das Zieladreßfeld AFV einer paketierten Nachricht piv für Verbundnetze VBN - siehe FIG 2 - eingefügt.

Für jeden der beiden Adreßtabellen-Speichereinrichtungen LBSP, VBSP ist für das Bilden von Kollisionstabellen eine Kollisionstabellen-Speichereinrichtung KTSP vorgesehen. In diese Kollisionstabellen-Speichereinrichtung werden die "kollidierenden", d. h. die Kommunikationsendgeräteadressen kea, eingetragen, die bei gleicher Hashspeicheradresse hsa unterschiedlich sind. Die Verweisadressen auf die Kollisionstabellen-Speichereinrichtung KTSP sind jeweils in den jeweiligen Speicherbereichen SB der Adreßtabellen-Speichereinrichtungen LBSP, VBSP eingetragen.

Die kollidierenden Kommunikationsendgeräteadressen kea können alternativ durch Adressenverkettung auch in den Adreßtabellen-Speichereinrichtungen hinterlegt werden.

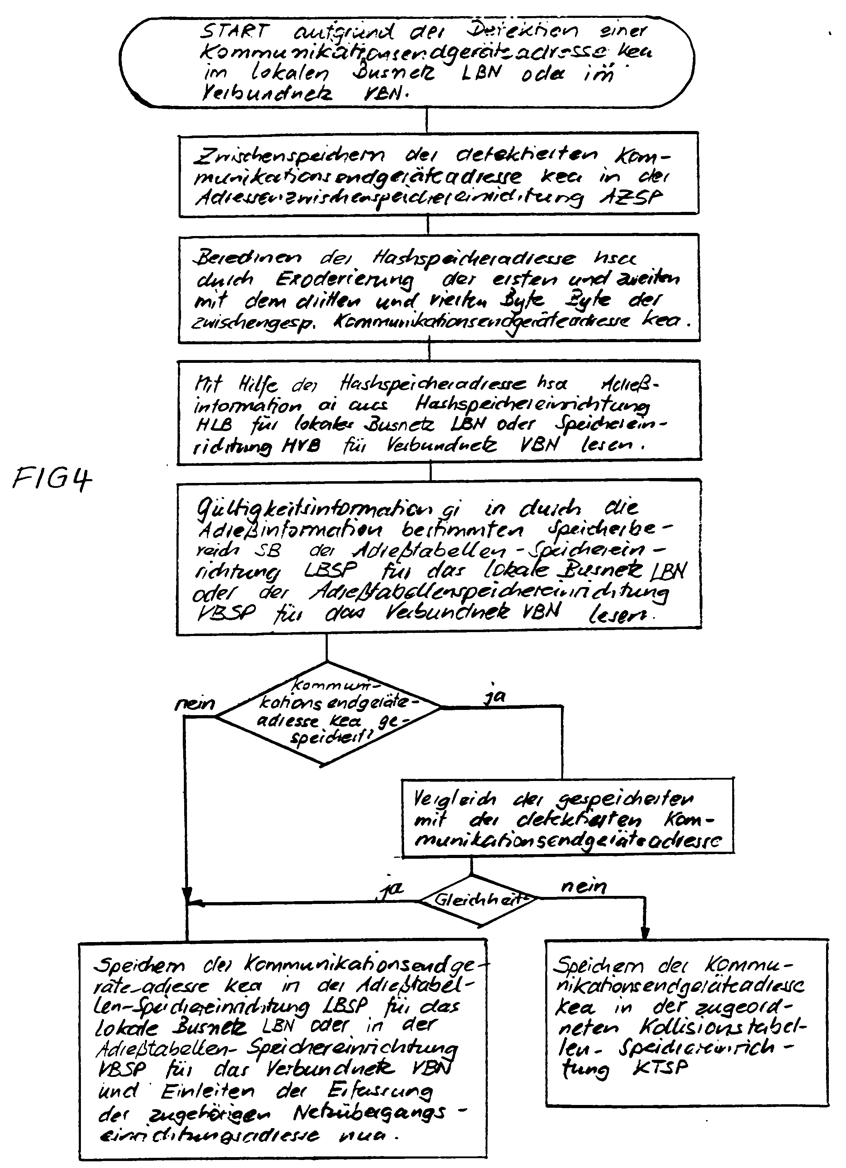

FIG 4 zeigt anhand eines Ablaufdiagrammes das erfindungsgemäße Verfahren zum Erfassen von Kommunikationsendgeräteadressen kea in einer Netzübergangseinrichtung NUE. Für das Ausführungsbeispiel sei angenommen, daß das per Programm realisierte erfindungsgemäße Verfahren nach der Einspeicherung einer Ursprungs-und Zielkommunikationsendgeräteadresse kea im Adressenzwischenspeicher AZSP initialisiert wird. Für das Ausführungsbeispiel sei des weiteren angenommen, daß für die vom lokalen Busnetz LBN übermittelten Kommunikationsendgeräteadressen kea und für die über das Verbundnetz VBN von den weiteren lokalen Busnetzen LBN übermittelten Kommunikationsendgeräteadressen kea und Netzübergangseinrichtungsadressen nua jeweils separate Adreßtabellen-Speichereinrichtungen LBSP, VBSP vorgesehen sind. Hierbei werden in der Adressentabelle der Adreßtabellen-Speichereinrichtung VBSP für das Verbundnetz VBN alle Kommunikationsendgeräteadressen kea der weiteren über das Verbundnetz VBN angeschlossenen Kommunikationsendgeräteadressen kea sowie die zugehörigen Adressen der Netzübergangseinrichtungen NUE erfaßt. Diese zusätzliche, zur Kommunikationsendgeräteadresse kea erfaßte Adresse der zugehörigen Netzübergangseinrichtungen NUE stellt eine sogenannte "Routing"-Information dar und erleichtert das gezielte Vermitteln der paketierten Nachrichten durch die angeschlossenen Netze LBN, VBN.

Wird ein Kommunikationsendgerät KE von einem der lokalen Netze LBN, VBN entfernt, so wird aufgrund der temporären Speicherung der Kommunikationsendgeräteadressen kea bzw. Netzübergangseinrichtungsadressen nua in den Adressentabellen die betreffende Adresse kea, nua nach einer vorgegebenen - üblicherweise durch den Netzbetreiber festgelegten - Zeitspanne gelöscht und nicht mehr als eines an ein Netz LBN, VBN angeschlossen und damit als inaktiv bewertet.

## Patentansprüche

1. Verfahren zum Erfassen von Adressen (kea) von an lokale Netze angeschlossenen Kommunikationsendgeräten (KE) in jeweils zwei lokale Netze (LRN, LBN) verbindenden Netzübergangseinrichtungen (NUE),
- bei dem mit Hilfe von in den paketierten Nachrichten (pi) eingefügten vermittlungstechnischen Kommunikationsendgeräte-Ursprungs- und Zieladressen (kea(u), kea(z)) die paketierten Nachrichten (pi) in den lokalen Netzen (LBN, LRN) vermittelt werden,
- bei dem in der Netzübergangseinrichtung (NUE) jede in den angeschlossenen lokalen Netzen (LBN, LRN) auftretende, n Bit umfassende Kommunikationsendgeräteadresse (kea) detektiert und aus dieser mit Hilfe eines Hashverfahrens eine n-m Bit aufweisende Hashspeicheradresse (hsa) berechnet wird, wobei n und m ganzzahlig und m < n ist,
- wobei die Hashspeicheradresse (hsa) die Adresse eines n-m Bit umfassenden Speicherplatzes einer in der Netzübergangseinrichtung (NUE) realisierten Hashspeichereinrichtung (HLB, HVN) darstellt,
**dadurch gekennzeichnet,** daß
- in dem adressierten Speicherplatz eine Adreßinformation (ai) eingetragen ist, die auf einen n Bit umfassenden Speicherbereich (SB) einer in der Netzübergangseinrichtung (NUE) angeordneten Adreßtabellen-Speichereinrichtung (LBSP, VBSP) zeigt und
- daß bei Nichtvorhandensein einer Kommunikationsendgeräteadresse (kea) im angezeigten Speicherbereich (SB) die aktuell detektierte Kommunikationsendgeräteadresse (kea) in diesem Speicherbereich (SB) gespeichert wird und bei Vorhandensein derselben Kommunikationsendgeräteadresse (kea) die detektierte Kommunikationsendgeräteadresse (kea) als erfaßt bewertet wird, wobei das Vorhandensein bzw. Nichtvorhandensein durch eine Gültigkeitsinformation (gi) angezeigt wird.

2. Verfahren nach Anspruch 1,
**dadurch gekennzeichnet**,
- daß in Netzübergangseinrichtungen (NUE), durch die entweder jeweils ein lokales Netz (LBN) mit einem mehrere lokale Netze (LBN) verbindenden lokalen Verbundnetz (VBN) oder ein lokales Verbundnetz (VBN) mit einem weitere lokale Verbundnetze (VBN) verbindenden lokalen Verbundnetz (VBN) verbunden wird, den paketierten Nachrichten (pi) zusätzlich zu der Ursprungskommunikationsendgeräteadresse (kea(u)) die eigene Netzübergangseinrichtungsadresse (nua(u)) beigefügt wird,
- daß die von den lokalen Verbundnetzen (VBN) übermittelten und den Ursprungs-Kommunikationsendgeräteadressen (kea(u)) zugeordneten Netzübergangseinrichtungsadressen (nua(u)) mit Hilfe eines Hashverfahrens erfaßt und gespeichert werden,
- daß die erfaßten, jeweils einer Kommunikationsendgeräteadresse (kea) zugeordneten Netzübergangseinrichtungsadressen (nua) im Sinne einer gezielten Übermittlung der paketierten Nachrichten (pi) an die dem Ziel-Kommunikationsendgerät (KE) zugeordneten Netzübergangseinrichtung (NUE) der jeweiligen paketierten Nachricht (pi) beigefügt werden,
- daß bei einer Übermittlung von paketierten Nachrichten (pi) über lokale Verbundnetze (VBN), bei der die der Ziel-Kommunikationsendgeräteadresse (kea(z)) zugeordnete Netzübergangseinrichtungsadresse (nua) noch nicht erfaßt wurde, in den jeweiligen Netzübergangseinrichtungen (NUE) den paketierten Nachrichten (pi) eine Rundsendeinformation (rsi) beigefügt wird.

3. Verfahren nach Anspruch 2,
**dadurch gekennzeichnet,**
daß die paketierten Nachrichten (pi) der lokalen Netze (LBN) bei Übermittlung über lokale Verbundnetze (VBN) jeweils in den Informationsteil (NTV) der paketierten Nachrichten (piv) der lokalen Verbundnetze (VBN) eingefügt wird, und daß die den Ursprungs-und Zielkommunikationsendgeräteadressen (kea(u), kea(z)) bzw. Rundsendeinformationen (rsi) zugeordnete Netzübergangseinrichtungsadressen (nua) jeweils in die Ziel- und Ursprungsadreßfel-der (AFV) der paketierten Nachrichten (piv) der- lokalen Verbundnetze (VBN) eingefügt werden.

4. Verfahren nach mindestens einem der vorhergehenden Ansprüche,
**dadurch gekennzeichnet,**
daß nach einer Detektierung einer Kommunikationsendgeräteadresse (kea) bzw. einer Netzübergangseinrichtungsadresse (nua) bei Vorhandensein einer Kommunikationsendgeräteadresse (kea) bzw. Netzübergangseinrichtungsadresse (nua) in der Speichereinrichtung (SPE) diese im Sinne des Feststellens einer Kommunikationsendgeräteadressen- bzw. Netzübergangseinrichtungsadressenkollision mit der detektierten Kommunikationsendgeräteadresse (kea) bzw. Netzübergangseinrichtungsadresse (nua) verglichen und bei Ungleichheit der detektierten und der gespeicherten Kommunikationsendgeräteadresse (kea) bzw. Netzübergangseinrichtungsadresse (nua) die detektierte Kommunikationsendgeräteadresse (kea) bzw. Netzübergangseinrichtungsadresse (nua) in einem Kollisionsspeicherbereich hinterlegt wird, sofern die detektierte betriebstechnische Kommunikationsendgeräteadresse (kea) bzw. Netzübergangseinrichtungsadresse (nua) nicht bereits gespeichert ist.

5. Verfahren nach Anspruch 4,
**dadurch gekennzeichnet,**
daß der Kollisionsspeicherbereich in einer separaten Kollisionstabellen-Speichereinrichtung (KTSP) vorgesehen ist, wobei bei Vorliegen einer Kommunikationsendgeräte- oder einer Netzübergangseinrichtungsadressenkollision ein freier Kollisionsspeicherbereich in der Kollisionstabellen-Speichereinrichtung (KTSP) ermittelt und dessen Adresse zusätzlich in den hashadressierten Speicherbereich (SB) eingetragen wird.

6. Verfahren nach Anspruch 4,
**dadurch gekennzeichnet,**
daß der Kollisionsspeicherbereich in der Adreßtabellen-Speichereinrichtung (LBSP, VBSP) vorgesehen ist, wobei bei Vorliegen einer Kommunikationsendgeräte- oder einer Netzübergangseinrichtungsadressenkollision ein freier Kollisionsspeicherbereich in der Adreßtabellen-Speichereinrichtung (LBSP, VBSP) ermittelt und dessen Adresse zusätzlich in den hashadressierten Speicherbereich (SB) eingetragen wird.

7. Verfahren nach mindestens einem der vorhergehenden Ansprüche,
**dadurch gekennzeichnet** ,
daß für das Hashverfahren ein Hashalgorithmus in Abhängigkeit von einer kurzen Berechnungszeit, von einem Codekomprimierungsumfang der Kommunikationsendgeräteadressen (kea) und von dem überwiegend benutzten Kommunikationsendgeräteadreßraum gewählt wird.

8. Verfahren nach mindestens einem der vorhergehenden Ansprüche,
**dadurch gekennzeichnet,**
daß bei einer 48 Bit umfassenden Kommunikationsendgeräteadresse (kea) bzw. Netzübergangseinrichtungsadresse (nua) ein Hashalgorithmus vorgesehen ist, bei dem die ersten zwei niederwertigsten Byte mit den zweiten zwei niederwertigsten Byte der jeweiligen Kommunikationsendgeräteadresse (kea) bzw. Netzübergangseinrichtungsadresse (nua) binär exoderiert werden.

9. Verfahren nach Anspruch 8,
**dadurch gekennzeichnet,**
daß die berechnete Hashspeicheradresse (hsa) durch Reduzieren weiterer niederwertiger Bits auf vorgegebene Hashspeichereinrichtungsgrößen abstimmbar ist.

10. Verfahren nach mindestens einem der vorhergehenden Ansprüche,
**dadurch gekennzeichnet,**
daß aus den detektierten Kommunikationsendgeräteadressen (kea) bzw. Netzübergangseinrichtungsadressen (nua) die Hashspeicheradressen (hsa) netzindividuell berechnet und die Kommunikationsendgeräteadressen (kea) bzw. Netzübergangseinrichtungsadressen (nua) in netzindividuellen Adressentabellen in der Adreßtabellen-Speichereinrichtung (LBSP, VBSP) gespeichert werden.

11. Verfahren nach mindestens einem der vorhergehenden Ansprüche,
**dadurch gekennzeichnet,**
daß in einer Netzübergangseinrichtung (NUE) nach dem Feststellen einer in einer paketierten, von einem Kommunikationsendgerät (KE) des zugehörigen lokal verwalteten Netzes (LBN) ausgesandten Nachricht (pi) enthaltenen Zielkommunikationsendgeräteadresse (kea(z)) in einer Adressentabelle, die die Adressentabelle eines von einer Netzübergangseinrichtung (NUE) lokal verwalteten lokalen Netzes (LBN) repräsentiert, das Weiterleiten der paketierten Nachricht (pi) an das weitere, an die Netzübergangseinrichtung (NUE) angeschlossene lokale Netz (LRN) oder lokale Verbundnetz (VBN) unterbunden wird.

12. Verfahren nach mindestens einem der vorhergehenden Ansprüche,
**dadurch gekennzeichnet,**
daß die in den Netzübergangseinrichtungen (NUE) erfaßten Kommunikationsendgeräteadressen (kea) bzw. Netzübergangseinrichtungsadressen (nua) temporär in der Speichereinrichtung (SPE) gespeichert werden, wobei die Speicherungsdauer auf die Größe der lokalen Netze (LBN, VBN) und eine vorgegebene Flexibilität hinsichtlich des Konfigurierens der lokalen Netze (LBN, VBN) abzustimmen ist.

## Claims

1. Method for recording addresses (kea) of communication terminals (KE) connected to local area networks in bridges (NUE) connecting two local area networks (LRN, LBN) in each case,
- in which, with the aid of switching-oriented communication terminal source and destination addresses (kea(u), kea(z)) inserted into the packeted messages (pi), the packeted messages (pi) are switched in the local area networks (LBN, LRN),
- in which each communication terminal address (kea) comprising n bits which occurs in the connected local area networks (LBN, LRN) is detected in the bridge (NUE), and from this a hash memory address (hsa) with n-m bits, where n and m are integers and m < n, is calculated using a hashing method,
- in which the hash memory address (hsa) represents the address of a memory location, comprising n-m bits, of a hash memory means (HLB, HVN) realized in the bridge (NUE),
characterized
- in that entered in the addressed memory location is address information (ai) that points to a memory area (SB), comprising n bits, of an address table memory means (LBSP, VBSP) arranged in the bridge (NUE), and
- in that if a communication terminal address (kea) is not present in the referended memory area (SB), the currently detected communication terminal address (kea) is stored in said memory area (SB), and if the same communication terminal address (kea) is present the detected communication terminal address (kea) is evaluated as recorded, with the presence or absence being indicated by validity information (gi).

2. Method according to Claim 1, characterized
- in that in bridges (NUE), by means of which either in each case a local area network (LBN) is connected to a local integrated network (VBN) that connects a plurality of local area networks (LBN), or a local integrated network (VBN) is connected to a local integrated network (VBN) that connects further local integrated networks (VBN), its own bridge address (nua (u)) is appended to the packeted messages (pi) in addition to the source communication terminal address (kea(u)),
- in that the bridge addresses (nua(u)) transmitted by the local integrated networks (VBN) and assigned to the source communication terminal addresses (kea(u)) are recorded and stored using a hashing method,
- in that the recorded bridge addresses (nua), which are assigned to a communication terminal address (kea) in each case, are appended to the respective packeted message (pi) for the purpose of targeted transmission of the packeted messages (pi) to the bridge (NUE) assigned to the destination communication terminal (KE),
- in that when packeted messages (pi) are transmitted via local integrated networks (VBN) in which the bridge address (nua) assigned to the destination communication terminal address (kea(z)) has not yet been recorded, broadcast information (rsi) is appended to the packeted messages (pi) in the respective bridges (NUE).

3. Method according to Claim 2, characterized in that, when transmitted via local integrated networks (VBN), the packeted messages (pi) of the local area networks (LBN) are inserted in each case into the information part (NTV) of the packeted messages (piv) of the local integrated networks (VBN), and in that the bridge addresses (nua) assigned to the source, and destination communication terminal addresses (kea(u), kea(z)) or broadcast information (rsi) are inserted in each case into the destination and source address fields (AFV) of the packeted messages (piv) of the local integrated networks (VBN).

4. Method according to at least one of the preceding claims, characterized in that after the detection of a communication terminal address (kea) or a bridge address (nua) respectively when a communication terminal address (kea) or bridge address (nua) respectively is present in the memory means (SPE), this address is compared with the detected communication terminal address (kea) or bridge address (nua) respectively for the purpose of determining a communication terminal address or bridge address collision, and if the detected and the stored communication terminal address (kea) or bridge address (nua) respectively are not identical, the detected communication terminal address (kea) or bridge address (nua) respectively is stored in a collision memory area, provided that the detected administrative communication terminal address (kea) or bridge address (nua) respectively is not already stored.

5. Method according to Claim 4, characterized in that the collision memory area is provided in a separate collision table memory means (KTSP), and, if a communication terminal or bridge address collision is present, a free collision memory area in the collision table memory means (KTSP) is determined and the address thereof is additionally entered in the hash-addressed memory area (SB).

6. Method according to claim 4, characterized in that the collision memory area is provided in the address table memory means (LBSP, VBSP), and, if a communication terminal or bridge address collision is present, a free collision memory area in the address table memory means (LBSP, VBSP) is determined and the address thereof is additionally entered in the hash-addressed memory area (SB).

7. Method according to at least one of the preceding claims, characterized in that a hashing algorithm is selected for the hashing method depending on a short calculation time, on the extent of code compression of the communication terminal addresses (kea) and on the communication terminal address space used the most.

8. Method according to at least one of the preceding claims, characterized in that in the case of a communication terminal address (kea) or bridge address (nua) respectively comprising 48 bits, a hashing algorithm is provided with which the first two lowest order bytes are binary EX-ORed with the second two lowest order bytes of the respective communication terminal address (kea) or bridge address (nua) respectively.

9. Method according to Claim 8, characterized in that the calculated hash memory address (hsa) is matched to given sizes of the hash memory means by reducing further lower order bits.

10. Method according to at least one of the preceding claims, characterized in that the hash memory addresses (hsa) are calculated from the detected communication terminal addresses (kea) or bridge addresses (nua) respectively for each specific network and the communication terminal addresses (kea) or bridge addresses (nua) respectively are stored in network-specific address tables in the address table memory means (LBSP, VBSP).

11. Method according to at least one of the preceding claims, characterized in that in a bridge (NUE) after a destination communication terminal address (kea (z)) contained in a packeted message (pi) sent by a communication terminal (KE) of the associated locally managed network (LBN) has been determined in an address table, which represents the address table of a local area network (LBN) locally managed by a bridge (NUE), the forwarding of the packeted message (pi) to the further local area network (LRN) or local integrated network (VBN) connected to the bridge (NUE) is prevented.

12. Method according to at least one of the preceding claims, characterized in that the communication terminal addresses (kea) or bridge addresses (nua) respectively recorded in the bridges (NUE) are temporarily stored in the memory means (SPE), it being necessary to match the storage duration to the size of the local area networks (LBN, VBN) and a prescribed flexibility with respect to the configuration of the local area networks (LBN, VBN).

## Revendications

1. Procédé de détection d'adresses (kea) de terminaux de communication (KE) raccordés à des réseaux locaux dans des dispositifs passerelle (NUE) reliant deux réseaux (LRN, LBN) locaux,
- dans lequel on transmet les informations (pi) mises en paquets dans les réseaux locaux (LBN, LRN) à l'aide d'adresses d'origine et de destination (kea(u), kea(z)) de terminaux de communication de commutation et insérés dans les informations (pi) mises en paquets,
- dans lequel, dans le dispositif passerelle (NUE), on détecte toute adresse de terminal de communication (kea) apparaissant dans les réseaux (LBN, LRN) locaux raccordés et comprenant n bits, et à partir de cette adresse on calcule à l'aide d'un procédé de Hash une adresse de mémoire de Hash (hsa) présentant n-m bits, n et m étant des nombres entiers et m < n,
- l'adresse de mémoire de Hash (hsa) représentant l'adresse d'un emplacement mémoire comprenant n-m bits d'un dispositif de mémoire de Hash d'adresse (HLB, HVN) réalisé dans le dispositif passerelle (NUE),
caractérisé en ce que
- dans l'emplacement mémoire adressé est enregistrée une information d'adresse (ai) qui indique une zone de mémoire, (SB) comprenant n bits, d'un dispositif de mémoire (LBSP, VBSP) pour tableaux d'adresses disposé dans le dispositif passerelle (NUE) et
- en cas d'absence d'une adresse de terminal de communication (kea) dans la zone de mémoire (SB) indiquée, on mémorise l'adresse du terminal de communication détectée de façon actuelle dans cette zone de mémoire (SB) et, en cas de présence de cette même adresse de terminal de communication (kea), on considère l'adresse détectée du terminal de communication (kea) comme détectée, la présence ou l'absence étant indiquée par une information de validité (gi).

2. Procédé selon la revendication 1, caractérisé en ce que dans des dispositifs passerelle (NUE), par lesquels soit un réseau local (LBN) est relié à un réseau d'interconnexion (VBN) local reliant plusieurs réseaux (LBN) locaux, soit un réseau d'interconnexion (VBN) local est relié à un réseau d'interconnexion (VBN) local reliant d'autres réseaux d'interconnexion (VBN) locaux, on joint la propre adresse du dispositif passerelle (nua(u)) aux informations (pi) mises en paquets en plus de l'adresse du terminal de communication d'origine (kea(u)),
- on détecte et on mémoire les adresses du dispositif passerelle (nua(u)) transmises par les réseaux d'interconnexion (VBN) locaux et attribuées aux adresses du terminal de communication d'origine (kea(u)) à l'aide d'un adressage de Hash,
- on joint les adresses du dispositif passerelle (nua) détectées et attribuées chacune à une adresse du terminal de communication (kea) à l'information (pi) mise en paquets en vue d'une transmission ciblée des informations (pi) mises en paquets au dispositif passerelle (NUE) attribué au terminal de communication de destination (KE),
- lors d'une transmission d'informations (pi) mises en paquets par des réseaux d'interconnexion (VBN) locaux, dans laquelle on n'a pas encore détecté l'adresse du dispositif passerelle (nua) attribuée à l'adresse du terminal de communication de destination (kea(z)), on joint une information d'adresses multiples (rsi) aux informations (pi) mises en paquets dans chaque disposititif passerelle (NUE).

3. Procédé selon la revendication 2, caractérisé en ce que
- l'on insère les informations (pi) mises en paquets des réseaux (LBN) locaux dans la partie information (NTV) des informations (piv) mises en paquets des réseaux d'interconnexion (VBN) locaux lors de la transmission par des réseaux d'interconnexion (VBN) locaux, on insère les adresses du dispositif passerelle (nua) attribuées aux adresses du terminal de communication d'origine et de destination (kea(u)), kea(z)) ou aux informations d'adresses multiples (rsi) dans les zones d'adresses de destination et d'origine (AFV) des informations (piv) mises en paquets des réseaux d'interconnexion (VBN) locaux.

4. Procédé selon au moins l'une quelconque des revendications précédentes, caractérisé en ce que, après détection d'une adresse du terminal de communication (kea) ou d'une adresse du dispositif passerelle (nua) et en cas de présence d'une adresse du terminal de communication (kea) ou d'une adresse du dispositif passerelle (nua) dans le dispositif de mémoire (SPE), on compare celle-ci à l'adresse détectée du terminal de communication (kea) ou à l'adresse détectée (nua) du dispositif passerelle en vue de constater une collision d'adresses du terminal de communication ou une collision d'adresses du dispositif passerelle et, en cas de d'inégalité entre l'adresse détectée du terminal de communication (kea) ou du dispositif passerelle (nua) et l'adresse mémorisée, on enregistre l'adresse détectée du terminal de communication (kea) ou du dispositif passerelle (nua) dans une zone de mémoire de collision dans la mesure où l'adresse d'exploitation détectée du terminal de communication (kea) ou du dispositif passerelle (nua) n'est pas déjà mémorisée.

5. Procédé selon la revendication 4, caractérisé en ce que la zone de mémoire de collision est prévue dans un dispositif de mémoire distinct pour les tableaux de collision (KTSP), une zone libre de mémoire de collision étant déterminée dans le dispositif de mémoire pour tableaux de collision (KTSP), en cas de collision d'adresses d'un terminal de communication ou d'un dispositif passerelle, et son adresse étant reportée en supplément dans la zone de mémoire (SB) adressée par le procédé de Hash.

6. Procédé selon la revendication 4, caractérisé en ce que la zone de mémoire de collision est prévue dans le dispositif de mémoire pour tableaux d'adresses (LBSP, VBSP), une zone libre de mémoire de collision étant déterminée dans le dispositif de mémoire pour tableaux d'adresses (LBSP, VBSP) en cas de collision d'adresses d'un terminal de communication ou d'un dispositif passerelle, et son adresse étant reportée en supplément dans la zone de mémoire (SB) adressée par le procédé de Hash.

7. Procédé selon au moins l'une des revendications précédentes, caractérisé en ce que, pour le procédé de Hash, on choisi un algorithme de Hash en fonction d'un temps de calcul court, d'un taux de compression de code des adresses du terminal de communication (kea) et de l'espace principalement utilisé pour les adresses du terminal de communication.

8. Procédé selon au moins l'une quelconque des revendications précédentes, caractérisé en ce que, pour une adresse du terminal de communication (kea) ou une adresse du dispositif passerelle (nua) comprenant 48 bits, il est prévu un algorithme de Hash, dans lequel on effectue en binaire une opération OU-EXCLUSIF entre les deux premiers octets de poids les plus faibles et les deux deuxièmes octets de poids les plus faibles de l'adresse respective du terminal de communication (kea) ou du dispositif passerelle (nua).

9. Procédé selon la revendication 8, caractérisé en ce que l'on peut adapter l'adresse de mémoire de Hash (hsa) à des grandeurs prescrites du dispositif de mémoire par réduction d'autres bits de poids faible.

10. Procédé selon au moins l'une quelconque des revendications précédentes, caractérisé en ce que, l'on calcule pour chaque réseau à partir des adresses détectées du terminal de communication (kea) ou du dispositif passerelle (nua), les adresses de mémoire de Hash (hsa) et on mémorise les adresses du terminal de communication (kea) et du dispositif passerelle (nua) dans des tableaux d'adresses prévus pour chaque réseau dans le dispositif de mémoire (LBSP, VBSP) pour les tableaux d'adresses.

11. Procédé selon au moins l'une des revendications précédentes, caractérisé en ce que, dans un dispositif passerelle (NUE) et après que l'on a constaté une adresse du terminal de communication de destination (kea(z)), contenue dans une information (pi) mise en paquets et émise par un terminal de communication (KE) du réseau (LBN) géré localement et associé, dans un tableau d'adresses qui représente le tableau d'adresses d'un réseau (LBN) local géré localement par un dispositif passerelle (NUE), on empêche la retransmission de l'information (pi) mise en paquets à l'autre réseau (LRN) local ou réseau d'interconnexion (VBN) local raccordé au dispositif passerelle (NUE).

12. Procédé selon au moins l'une quelconque des revendications précédentes, caractérisé en ce que l'on mémorise temporairement les adresses du terminal de communication (kea) ou du dispositif passerelle (nua) détectées dans les dispositifs passerelle (NUE) dans le dispositif de mémoire (SPE), la durée de mémoire devant être adaptée à la taille des réseaux (LBN, VBN) locaux et à une flexibilité prédéfinie de la configuration des réseaux (LBN, VBN) locaux.
